# EUROPEAN PATENT APPLICATION

(11) **EP 2 477 189 A1**
(43) Date of publication of application: **18.07.2012**
(21) Application number: 12164102.1
(22) Date of filing: 12.10.2006
(51) Int. Cl.: G10L 19/14, G10L 19/00, G10L 21/02

(54) **Method and apparatus for processing/transmitting bit-stream, and method and apparatus for receiving/processing bit-stream**

(30) Priority: 30.05.2006 KR 20060049081; 30.05.2006 KR 20060049082; 19.07.2006 KR 20060067705; 28.09.2006 KR 20060095040; 12.10.2005 US 725317 P; 14.10.2005 US 726159 P
(62) Divisional of application: 06799178.6
(71) Applicant: Samsung Electronics Co., Ltd., Seoul 442-742 (KR)
(72) Inventor: Kim, Jung-Hoe, 449-901 Gyeonggi-do (KR); Oh, Eun-Mi, 449-901 Gyeonggi-do (KR)
(74) Representative: Grünecker, Kinkeldey, Stockmair & Schwanhäusser

(57) **Abstract**

Provided is a method and apparatus for hierarchically coding/decoding audio data such as bit sliced arithmetic coding (BSAC). Accordingly, payloads of audio data and extension data can be grouped and interleaved according to priority so that some groups of the payloads are dropped, and the rest of groups are transmitted. Therefore, the extension data that is more important than a top layer of audio data in terms of reproducing original sound can be transmitted with priority.

## Description

### Technical Field

This application claims the benefit of U.S. Provisional Application No. 60/725,317, filed on Ocober 12, 2005, and No. 60/726,159, filed on October 14, 2005, and priority of Korean Patent Application No. 10-2006-0049081, filed on May 30, 2006, No. 10-2006-0049082, filed on May 30, 2006, No 10-2006-0067705, filed July 19, 2006, and No 10-2006-0095040, filed September 28, 2006, in the Korean Intellectual Property Office, the disclosure of which are incorporated herein in their entirety by reference.

The present invention relates to a method and apparatus for coding/decoding audio data, and more particularly, to a method and apparatus for hierarchically coding/ decoding audio data such as bit sliced arithmetic coding (BSAC).

### Background Art

There are two ways to transmit a bit sliced arithmetic coding (BSAC) payload to support the functionality of fine granular scalability (FGS). One is to drop elementary streams for a BSAC access unit. In this case, the access unit is defined as an independently accessible part in an elementary stream. The access unit is the smallest data unit that can contain timing information. The other is to truncate the BSAC payload on a server side providing audio data, that is, a coder side. The former occurs on a sync layer and a deliver layer, while the latter occurs on a compression layer. The two methods can be used simultaneously.

### Disclosure of Invention

### Technical Problem

When a bit-stream is transmitted to a decoder by hierarchically coding audio data in a coder using the aforementioned transmission methods, a problem conventionally lies in that there no solution to effectively transmit the hierarchically coded audio data along with extension data that can form audio data such as data for extending a channel of audio data to a multi-channel, data for extending a bandwidth of audio data, and data for generating a cyclic redundancy code (CRC) for checking a transmission error of audio data.

### Technical Solution

The present invention provides an apparatus and for enhancing audio data scalability for providing backward compatibility so as to support a conventional hierarchical coding method.

The present invention also provides an apparatus and method for providing a solution in which importance of extension data is taken into account in addition to importance of an audio data band for scalable transmission.

The present invention also provides a computer-readable medium having embodied thereon a computer program for executing the aforementioned methods.

However, the present invention is not limited to the above aspects, and other aspects may be present. This will be clearly understood those skilled in the art from the descriptions below.

According to an aspect of the present invention, there is provided a method of processing/transmitting a bit-stream, the method comprising: coding audio data and one or more extension data of the audio data; interleaving payloads resulting from the coding by grouping the payloads; and dropping a group of the payloads grouped and interleaved, and transmitting the rest of groups of the payloads.

According to another aspect of the present invention, there is provided a computer-readable medium having embodied thereon a computer program for executing the method of processing/transmitting a bit-stream.

According to another aspect of the present invention, there is provided an apparatus for processing/transmitting a bit-stream, the apparatus comprising: a coder that codes audio data and one or more extension data of the audio data; a processor that interleaves payloads resulting from the coding by grouping the payloads; and a transmitter that drops a group of the payloads grouped and interleaved, and transmits the rest of groups of the payloads.

According to another aspect of the present invention, there is provided a method of processing/transmitting a bit-stream, the method comprising: coding audio data and one or more extension data of the audio data; truncating some payloads resulting from the coding; and transmitting the truncated payloads.

According to another aspect of the present invention, there is provided a computer-readable medium having embodied thereon a program for executing the method of processing/transmitting a bit-stream.

According to another of the invention, the is provided an apparatus for processing/transmitting a bit-stream, the apparatus comprising: a codger that codes audio data and one or more extension data of the audio data; a truncator that truncates some payloads resulting from the coding of the coder; and a transmitter that transmits the truncated payloads.

According to another aspect of the present invention, there is provided a method of receiving/processing the method comprising, receiving some payloads grouped and interleaved; the payloads grouped and interleaved to original form; and decoding audio data included in the restored payloads and one or more extension data of the audio data.

According to another aspect of the present invention, there is provided a computer-readable medium having embodied thereon a computer program for executing the method of receiving/pracessing a bit-stream.

According to another aspect of the present invention, there is provided an apparatus for receiving/processing a bit-stream, the apparatus comprising: a receiver that receives some payloads grouped and interleaved; a restorer that restores the payloads grouped and interleaved to original form; and a decoder that decodes audio data included in the restored payloads and one or more extension data of the audio data.

According to another aspect of the present invention, there is provided a method of receiving/processing a bit-stream, the method comprising: receiving payloads having a truncated part; restoring the payloads having a truncated part to the original form; and decoding audio data included in the restored payloads and extension data of the audio data.

According to another aspect of the present invention, there is provided a computer-readable medium having embodied thereon a computer program for executing the method of receiving/processing a bit-stream.

According to another aspect of the present invention, there is provided an apparatus of receiving/processing a bit-stream, the apparatus comprising: a receiver that receives payloads having a truncated part; a restorer that restores the payloads having a truncated part to the original form; and a decoder that decodes audio data included in the restored payloads and one or more extension data of the audio data.

### Advantageous Effects

According to the present invention, payloads of audio data and extension data thereof can be grouped and interleaved according to priority so that some groups thereof are dropped, and the rest of groups are transmitted. Therefore, the extension data that is more important than a top layer of audio data in terms of reproducing sound can be transmitted with priority.

In addition, audio data and extension data of the audio data are coded, and some payloads of audio data are truncated. Since the truncated payloads of audio data are transmitted along with a payload of extension data, it is possible to achieve graceful degradation in sound quality while significantly reducing the total bit-rate of audio data. In conclusion, the present invention provides a solution in which importance of extension data is taken into account in addition to importance of an audio data band for scalable transmission.

### Description of Drawings

The above and other features and advantages of the present invention will become more apparent by describing in detail exemplary embodiments thereof with reference to the attached drawings in which:

FIG. 1 is a block diagram of a bit-stream processing/transmitting apparatus according to an embodiment of the present invention;

FIG. 2 illustrates an example of dropping an elementary stream in a bit-stream processing/transmitting apparatus according to an embodiment of the present invention;

FIG. 3 illustrates another example of dropping an elementary stream in a bit-stream processing/transmitting apparatus according to an embodiment of the present invention;

FIG. 4 illustrates another example of dropping an elementary stream in a bit-stream processing/transmitting apparatus according to an embodiment of the present invention;

FIG. 5 is a block diagram of a bit-stream processing/transmitting apparatus according to another embodiment of the present invention;

FIG. 6 illustrates an example of truncating a payload in a bit-stream processing/ transmitting apparatus according to an embodiment of the present invention;

FIG. 7 is a block diagram of a bit-stream receiving/processing apparatus according to an embodiment of the present invention;

FIG. 8 is a block diagram of a bit-stream receiving/processing apparatus according to another embodiment of the present invention;

FIG. 9 is a flowchart of a bit-stream processing/transmitting method according to an embodiment of the present invention;

FIG. 10 is a flowchart of a bit-stream processing/transmitting method according to another embodiment of the present invention;

FIG. 11 is a flowchart of a bit-stream receiving/processing method according to another embodiment of the present invention; and

FIG. 12 is a flowchart of a bit-stream receiving/processing method according to another of the present invention.

### Mode for Invention

Hereinafter, exemplary embodiments of the present invention will be described with reference to the accompanying drawings.

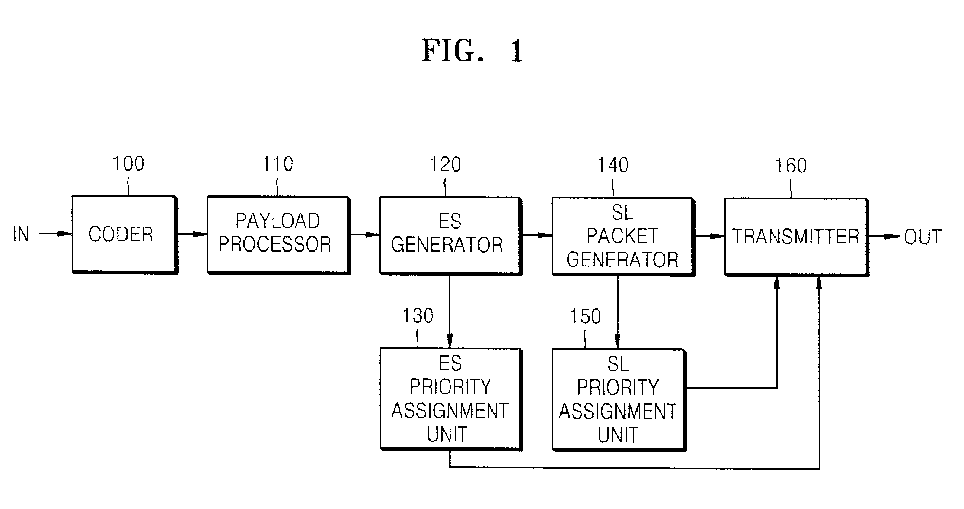

FIG. 1 is a block diagram of a bit-stream processing/transmitting apparatus according to an embodiment of the present invention. The bit-stream processing/ transmitting apparatus includes a coder 100, a payload processor 110, an elementary stream (ES) generator 120, an ES priority assignment unit 130, a sync layer (SL) packet generator 140, a SL priority assignment unit 150, and a transmitter 160.

The coder 100 hierarchically codes audio data and extension data of the audio data. In this case, the audio data may be coded by using a bit sliced arithmetic coding (BSAC) method. Examples of the extension data of the audio data include data for extending a channel of audio data to a multi-channel, data for extending a bandwidth of audio data, and data for generating a cyclic redundancy code (CRC) for checking a transmission error of audio data. In addition to the aforementioned extension data, extension data of the audio data may be meta data of the audio data or may include a fill element of the audio data. When the extension data of the audio data is coded, the coder 100 may code at least one of the aforementioned examples of the extension data of the audio data.

When an elementary stream is dropped for a method using an access unit among payload transmission methods, the payload processor 110 groups and interleaves payloads so that some of the payloads included in one sub frame resulting from the coding of the coder 100 and some of the payloads included in another sub frame belong to one group. In MPEG standard, an access unit is defined as an independently accessible part in an elementary stream, and is the smallest data unit that can contain timing information.

The ES generator 120 generates elementary streams corresponding to payload groups on a compression layer from the payloads that are grouped and interleaved by the payload processor 110. The compression layer is defined as a layer that receives a coding result of the coder 100 and thus generates elementary streams.

The ES priority assignment unit 130 assigns priority to the elementary streams generated by the ES generator 120. More specifically, the ES priority assignment unit 130 assigns priority to the respective elementary streams according to a transmission priority on a decoder side. Accordingly, the respective elementary streams generated by the ES generator 120 have a priority specified in an ES descriptor.

The SL packet generator 140 generates SL packets corresponding to payload groups on a sync layer from the elementary streams generated by the ES generator 120. The sync layer is defined as a layer that generates SL packets providing sync inforination between an audio data codex and an audio data decoder by adapting elementary streams.

The SL priority assignment unit 150 assigns priority to the respective SL packets generated by the SL packet generator 140. More specifically, the SL priority assignment unit 150 assigns priority to the respective SL packets according to the transmission priority on the decoder side. The priority signed to the respective elementary streams by the ES priority assignment unit 130 and the priority assigned the respective SL packets by the SL priority assignment unit 150 enable several elementary streams to be dropped for scalable transmission on a sync layer and a delivery layer.

The transmitter 160 drops some of the SL packets and transmits the rest of the SL packets according to the priority of the respective elementary streams assigned by the ES priority assignment unit 130 and the priority of the respective SL packets assigned by the SL priority assignment unit 150. More specifically, the transmitter 160 determines a total bit-rate for transmitting SL packets by considering a transmission environment between a coder side and a decoder side. Further, the transmitter 160 drops the SL packets in the descending order of values obtained by subtracting priority of SL packets from priority of elementary streams, and transmits the rest of SL packets.

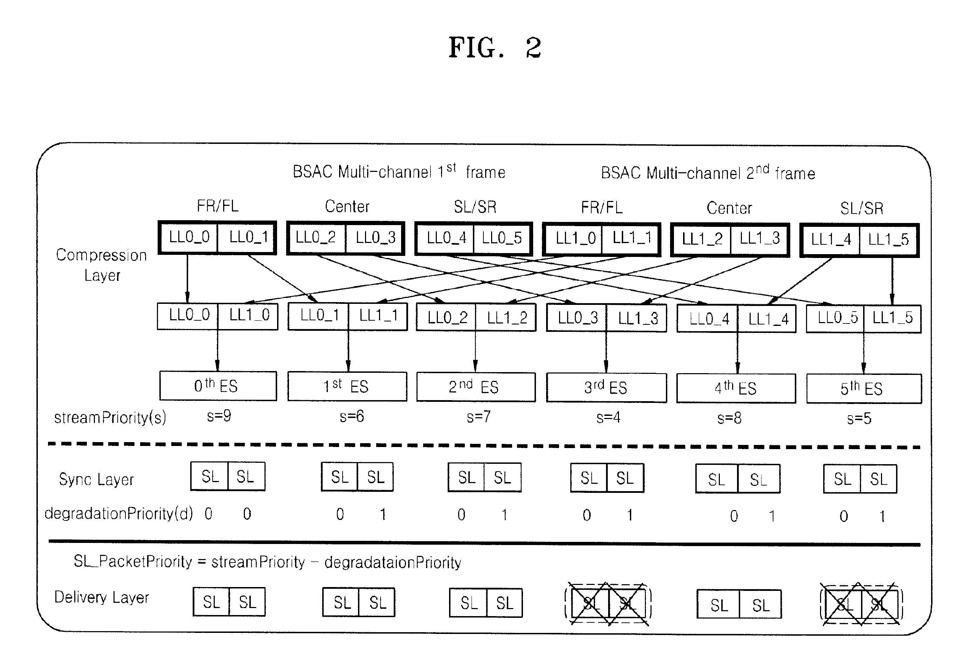

FIG. 2 illustrates an example of dropping an elementary stream in a bit-stream processing/transmitting apparatus according to an embodiment of the present invention.

The example of FIG. 2 shows scalable transmission of BSAC audio data and extension data thereof when extension data of audio data is data for extending a channel of audio data to a multi-channel. That is, this examples shows scalable transmission of BSAC payloads corresponding to 'BSAC channel extension'.

In the example illustrated in FIG. 2, the number of sub frames is set to 2, and four SL packets having low priority are dropped. However, the number of the sub frames is not limited to 2 in the present invention, and thus one or more sub frames may be used. Further, the number of dropped SL packets may occasionally change. The dropped packets correspond to a top layer of the BSAC payloads of audio data included in a center (C) channel and a surround left (SL)/ surround right (SR) channel corresponding to extension data of the audio data. Accordingly, audio data of each channel can be evenly reproduced by allowing a base layer corresponding to a low frequency band to be transmitted with priority for the audio data of each channel.

In FIG. 2, the payload processor 110 groups and interleaves BSAC payloads resulting from the coding of the coder 100 so that some of the payloads of audio data and of the payloads of data for extending a channel of audio data belong to one group.

For example, if 5.1 channel audio daw is in the present embodiment, the payload professor 110 groups and interleaves payload so that a base layer LL0_0 and a base layer LL1_0 belong to one group, wherein the base layer LL0_0 is included in each layer's payloads of audio data for a front left (FL) channel and a front right (FR) channel resulting from the coding of the coder 100 with respect to the FL channel and the FR channel, and the base layer LL1_0 is included each layer's BSAC payloads of data for a SL channel and a SR channel resulting from the coding of the coder 100 with respect to the SL channel and the SR channel.

Further, the payload processor 110 groups and interleaves payloads so that a top layer LL0_1 and a top layer LL1_1 belong to one group, wherein the top layer LL0_1 is included in each layer's BSAC payloads of audio data for the FL channel and the FR channel resulting from the coding of the coder 100 with respect to the FL channel and the RF channel, and the top layer LL1_1 is included in each layer's BSAC payloads of audio data for a SL channel and a SR channel resulting from the coding of the coder 100 with respect to the SL channel and the SR channel.

The ES generator 120 generates a 0th elementary stream from the payloads LL0-0 and payloads LL1_0 which have been grouped and interleaved to be one group by the payload processor 110. Subsequently, the ES priority assignment unit 130 assigns a priority of 9 to the 0th elementary stream generated by the ES generator 120. The SL packet generator 140 generates two SL packets from the 0th elementary stream generated by the ES generator 120. Thereafter, the SL priority assignment unit 150 assigns a priority of 0 to the respective SL packets generated by the SL packet generator 140. Likewise, the rest of payloads illustrated in FIG. 2 are subject to the same process.

According to the total bit-rate for transmission of SL packets, the transmitter 160 drops the four SL packets in the descending order of values obtained by subtracting priority of SL packets from priority of elementary streams, and transmits the rest of SL packets.

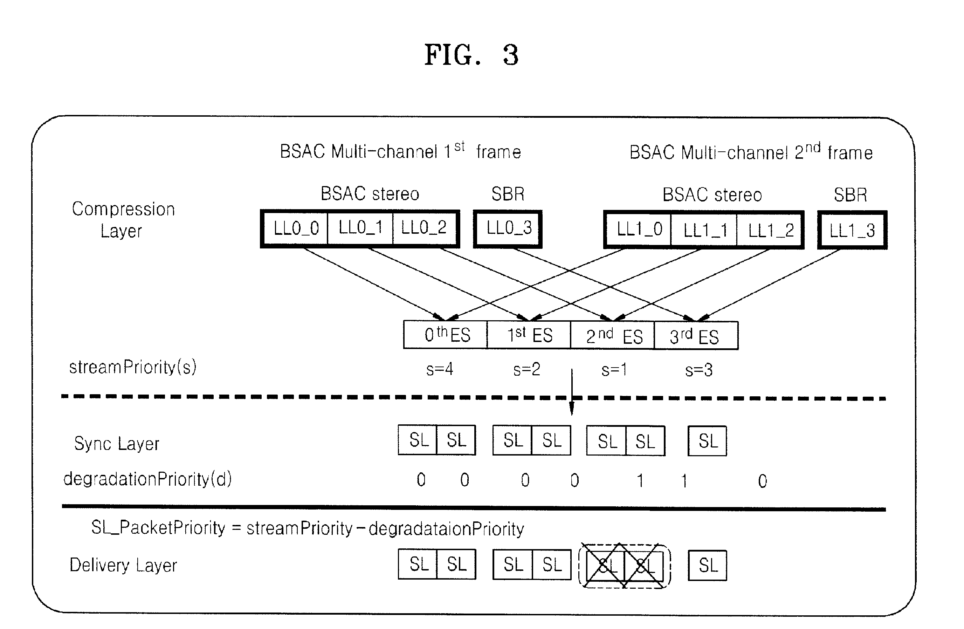

FIG. 3 illustrates another example of dropping an elementary stream in a bit-stream processing/transmitting apparatus according to an embodiment of the present invention.

The examples of FIG. 3 shows scalable transmission of audio data and extension data thereof when the extension data of stereo audio data is data for extending a bandwidth of audio data. That is, this example shows scalable transmission of BSAC payloads resulting from the coding performed by using 'BSAC spectral band replication (SBR) enhancement'.

In the example illustrated in FIG. 2, the number of sub frames is set to 2, and two SL packets having low priority are dropped. However, the number of the sub frames is not limited to 2 in the present invention, and thus one or sub frames may be used. Further, the number of dropped SL packets may occasionally change. The dropped packets correspond to a top layer of each layer's BSAC payloads of stereo audio data included in a first sub frame and a top layer of each layer's BSAC payloads of stereo audio data included in a second sub frame. Accordingly, a total bit-rate to be transmitted can be reduced by increasing the dropped SL packets. The total bit-rate to be transmitted is and results in graceful degradation in sound quality where high frequency signals in association the top layer are reconstructed with a SBR tool.

In FIG. 3, the payload processor 110 groups and interleaves

BSAC payloads resulting from the coding of the coder 100 so that some of the BSAC payloads of audio data included in the first sub frame and some of the BSAC payloads of audio data included the second sub frame belong to one group, while a payload of data for extending a bandwidth of audio data included in the first sub frame and a payload of data for extending a bandwidth of audio data included in the second sub frame belong to one group.

For example, if stereo audio data is used in the present embodiment, the payload processor 110 groups and interleaves payloads so that the base layer LL0_0 and the base layer LL1_0 belong to one group, wherein the base layer LL0_0 is included in each layer's BSAC payloads of audio data for the FL channel and the FR channel included in the first sub frame resulting from the coding of the coder 100 with respect to the FL channel and the FR channel, while the base layer LL1_0 is included in each layer's BSAC payloads of audio data for the FL channel and the FR channel included in the second sub frame. Likewise, the rest of layers of audio data for the FL channel and the FR channel are subject to the same process.

Further, the payload processor 110 groups and interleaves payloads so that a BSAC payload LL0_3 and a BSAC payload LL1_3 belong to one group, wherein the BSAC payload LL0_3 is included in data for extending a bandwidth of audio data for the FL channel and the FR channel included in the first sub frame resulting from the coding of the coder 100, while the BSAC payload LL1_3 is included in data for extending a band width of audio data for the FL channel and the FR channel included in the second sub frame.

The ES generator 120 generates a 0th elementary stream from the payloads LL0_0 and payloads LL1_0 which have been grouped and interleaved to be one group by the payload processor 110. Likewise, the rest of layers of the audio data for the FL channel and the FR channel are subject to the same process.

Further, the ES generator 120 generates a third element stream from the payloads LL0_3 and payloads LL1_3 which have been grouped and interleaved to be one group by the payload processor 110. Subsequently, the ES priority assignment unit 130 assigns a priority of 9 to the 0th elementary stream generated by the ES generator 120. Likewise, the rest of layers of the audio data for the FL channel and the FR channel are subject to the same process. Further, the ES priority assignment unit 130 assigns a priority of to the third elementary stream generated by the ES generator 120.

Thereafter, the SL packet generator 140 generates two SL packets from the respective elementary strewns generated by the ES generator 120. Then, the SL priority assignment unit 150 assigns priority to the respective SL packets generated by the SL packet generator 140. According to the total bit-rate for transmission of SL packets, the transmitter 160 drops the two SL packets in the descending order of values obtained by subtracting priority of SL packets from priority of elementary streams, and transmits the rest of SL packets.

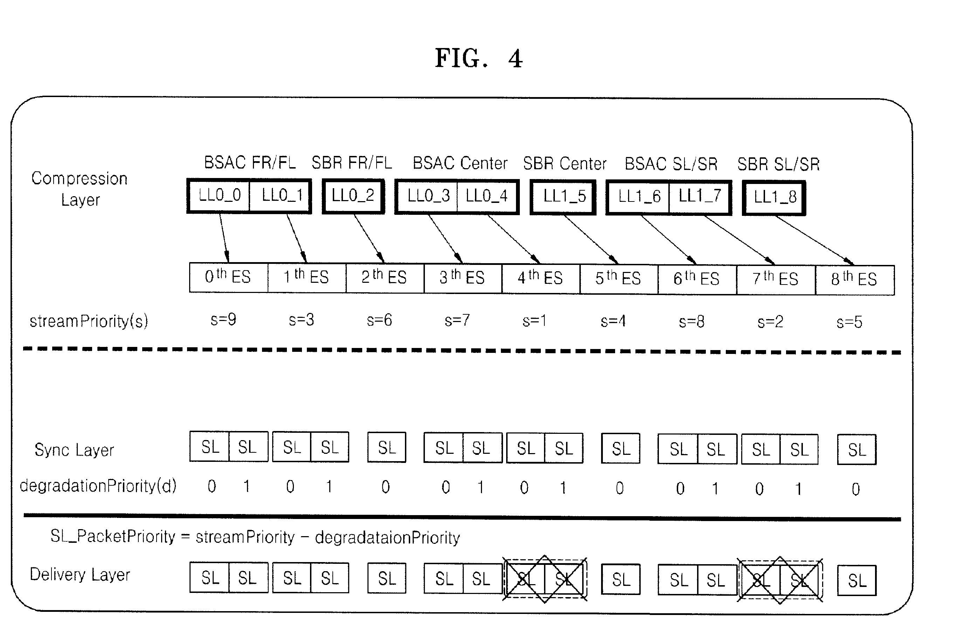

FIG. 4 illustrates another example of dropping an elementary stream in a bit-stream processing/transmitting apparatus according to an embodiment of the present invention.

The example of FIG. 4 shows scalable transmission of BSAC audio data and extension data thereof when extension data of audio data is data for extending a channel of audio data. That is, this example shows scalable transmission of 'BSAC channel extension with SBR'.

In the example illustrated in FIG. 4, four SL packets having a low priority are dropped. However, the number of the sub frames is not limited to 1 in the present invention, and thus one or more sub frames may be used. Further, the number of dropped SL packets may occasionally change.

In FIG. 4, the payload processor 110 groups and interleaves

payloads resulting from the coding of the coder 100 so that some of the BSAC payloads of audio data, some of the payloads of data for extending a channel of audio data to a multi-channel, and payloads of data for extending a bandwidth of audio data belong to one group.

The ES generator 120 generates a 0th elementary stream from the payloads LL0_0 which have been grouped and interleaved to be one group by the payload processor 110. Subsequently, the ES priority assignment unit 130 assigns a priority of 9 to the 0th elementary stream generated by the ES generator 120. The SL packet generator 140 generates two SL packets from the 0th elementary stream generated by the ES generator 120. Thereafter, the SL priority assignment unit 150 assigns priorities of 0 and 1 to the respective SL packets generated by the SL packet generator 140. Likewise, the rest of payloads illustrated in FIG. 4 are subject to the same process.

According to the total bit-rate for transmission of SL the transmitter 160 drops the four SL packets in the descending order of values obtained buy subtracting priority of SL packets from priority of elementary streams, and the rest of SL packets.

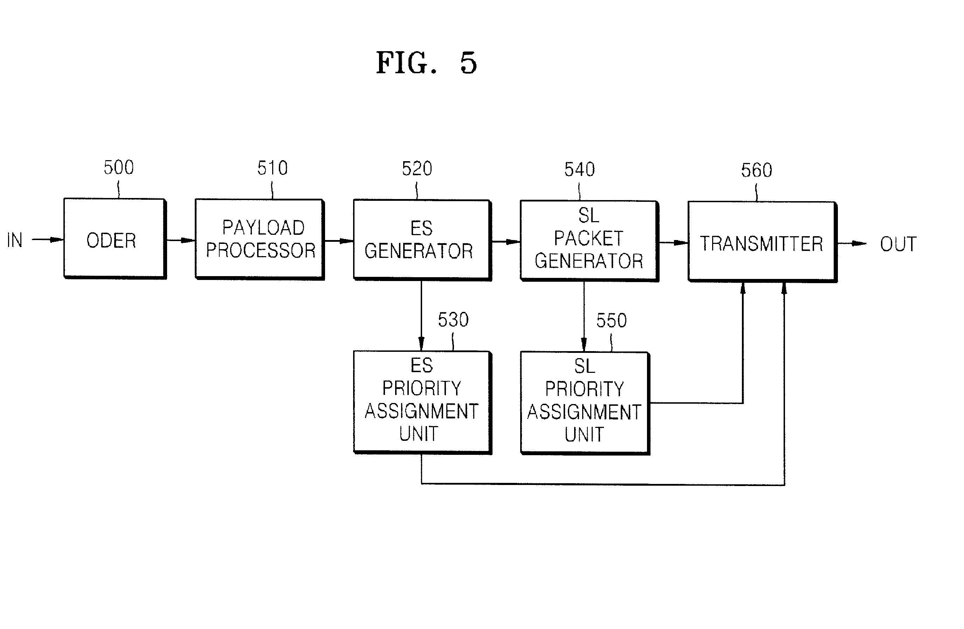

FIG. 5 is a block diagram of a bit-stream processing/transmitting apparatus according to another embodiment of the present invention. The bit-stream processing/ transmitting apparatus includes a coder 500, a a payload processor **510**, an ES generator **520,** an ES priority assignment unit a SL packet generator **540**, a SL priority assignment unit 550, ant a transmitter **560.**

The coder 500 hierarchically codes audio data and extension data of the audio data. In this case, the audio data may be coded according to a BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, the coder 500 may code at least one of the aforementioned examples of the extension data of the audio data.

The payload processor 510 truncates some of the payloads included in one sub frame resulting from the coding of the coder 500 along with some of the payloads included in another sub frame by considering a transmission environment between a coder side and a decoder side, for example, by considering the number of layers that can be determined according to a payload from a back-channel.

The payload processor 510 truncates some of the payloads with a'light-weight server process'. In the present embodiment, the light-weight server process is defined as an additional process required to truncate some of the payloads, for example, to parse a bit-stream. The term 'light-weight' is used because processing and transmission of payloads are simpler when in comparison with a method of dropping an elementary stream for an access unit among transmission methods of BSAC payloads.

Further, the payload processor 510 truncates only some of the payloads of audio data, and does not truncate a payload of extension data of the audio data. Therefore, the payload processor 510 separates a payload of audio data from a payload of extension data by parsing a bit-stream, and truncates only some of the payloads which do not belong to extension data according to the result of separation.

The 'zero_code' and the 'sync_word' can be used for such separation in BASC. That is, the payload processor 510 identifies the payload of extension data by using the 'zero_code' and the 'sync_word', and truncates only some of the payloads which do not belong to the payloads of extension data. The payload processor 510 concatenates the 'zero_code' and the 'sync_word' at the end of the truncated payloads so that an access unit can be extracted from the transmitted elementary stream (ES) whem an audio data decoder checks the 'zero_code' and the 'sync_word'. If there is no payload of extension data, the process is rather simple since the aforementioned separation is not needed.

Further, the payload processor 510 determines a target bit-rate by considering a transmission environment between the coder side and the decoder side, calculates the number of target layers according to the target bit-rate, and truncates some of the payloads depending on the number of target layers,

The ES generator 520 generates one elementary stream corresponding to payload groups on the compression layer from the payloads truncated by the payload processor 510, and also generates another elementary stream from the payload of extension data. The ES priority assignment unit 530 assignes priority to the elementary streams generated by the ES generateor 520. Subsequently, the SL packet generator 540 generates SL packets corresponding to payload groups on the sync layer from elementary streams generated by the ES generator 520. The SL priority assignment unit 550 assignes priority to the respective SL packets generated by the SL packet generator 540. The transmitter 560 transmits the SL packets generated by the SL packet generator 540. As described above, the ES generator 520, the SL packet generator 540, and the transmitter 560 are not subject to a special process for scalable transmission according to the present embodiment.

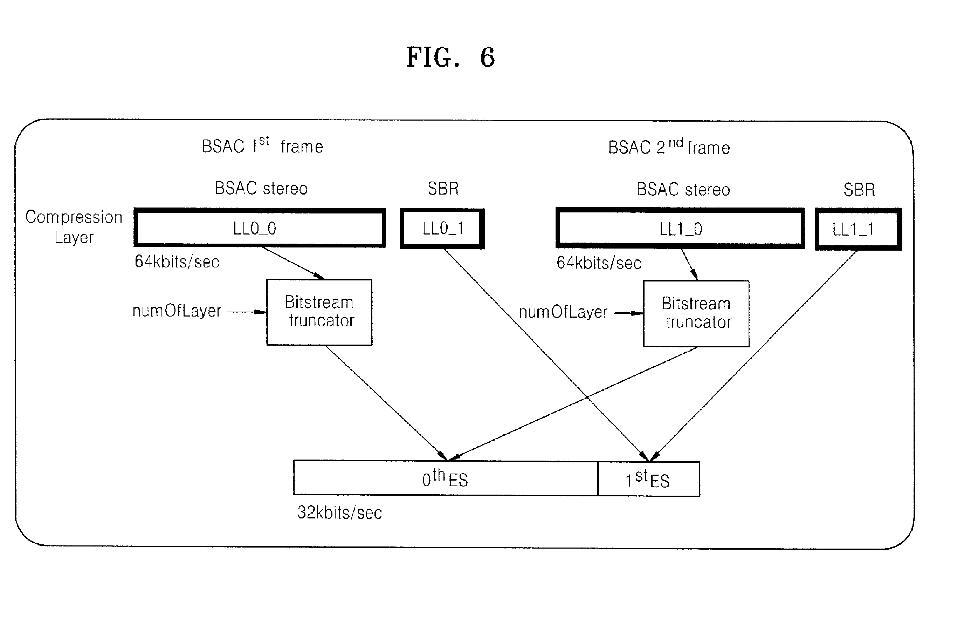

FIG. 6 illustrates an example of truncating a payload in a bit-stream processing/ transmitting apparatus according to an embodiment of the present invention.

The example of FIG. 6 shows scalable transmission of audio data and extension data thereof when extension data of stereo audio data is data for extending a bandwidth of audio data. That is, this example shows scalable transmission of a payload resulting from the coding performed by using'BSAC SBR enhancement'.

Referring to FIG. 6, the number of sub frames is set to 2. In this case, the payload processor 510 truncates a part of each layer's payloads LL0_0 of stereo audio data included in the first sub frame and a part of each layer's payloads LL1_0 of stereo audio data included in the second sub frame. The ES generator 520 generates a 0th elementary stream from the payloads LL0_0 and LL1_0 truncated by the payload processor 510, and generates a first elementary stream from the data LL0_1 and LL1_1 for extending a bandwidth of audio data.

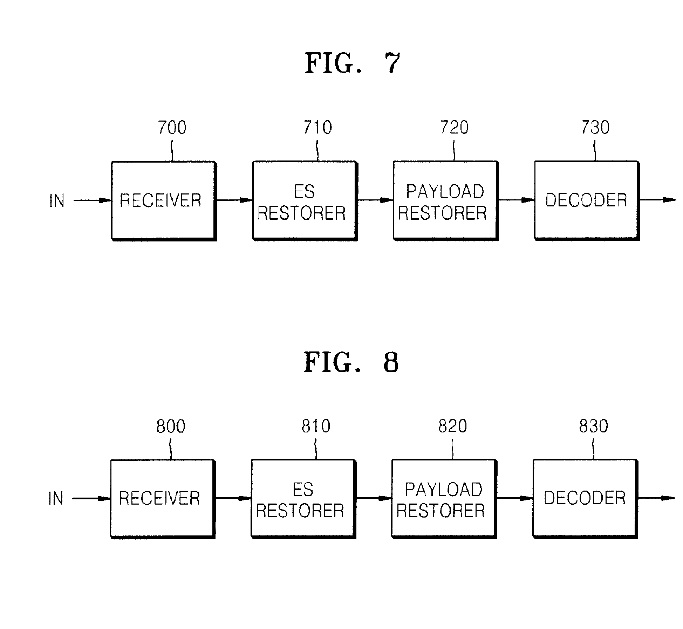

FIG. 7 is a block diagram of a bit-stream receiving/processing apparatus according to an embodiment of the present invention. The bit-stream receiving/processing apparatus includes a receiver 700, an ES restorer 710, a payload restorer 720, and a decoder 730. According to the configuration illustrated in FIG. 7, a method of dropping an elementary stream can be implemented.

The receiver 700 receives a bit-stream in a specific packet format through an input terminal IN, and thus receives SL packets including some of the payloads grouped and interleaved by the bit-stream processing/transmitting apparatus of FIG. 1. According to the present embodiment, the receiver 700 receives some of the payloads included in one sub frame and some of the payloads included in another sub frame as one group.

In the exemplary case illustrated in FIG. 2, the receiver 700 receives a base layer on each layer's BSAC payloads of audio data and a base layer of payloads of each layer of data for extending a channel of this audio data as one group. Further, the receiver 700 receives a top layer on each layer's payloads of audio data and a top layer on each layer's payloads of data for extending a channel of this audio data.

In the exemplary case illustrated in FIG. 3, the receiver 700 receives some BSAC payloads of audio data included in one of sub frame and some BSAC payloads of audio data included in another sub frame as one group. Further, the receiver 700 receives a payload of data for extending a bandwidth of audio data included in one sub frame and a payload of data for extending a bandwidth of audio data included in another sub frame as one group.

The ES restorer 710 parses the SL packets received by the receiver 700 on the SL layer, and thus restores elementary streams including some of the payloads grouped and interleaved by the bit-stream processing/transmitting apparatus of FIG. 1. The SL layer is defined as a layer for performing operations required to synchronize an audio data coder and an audio data decoder, for example, an operation of extracting synchronization information between the audio data coder and the audio data decoder from SL packets.

The payload restorer 720 restores a payload to the original form by parsing the elementary streams restored by the ES restorer 710. That is, the payload restorer 720 restores the payloads to the original form by using the elementary streams including some of the payloads grouped and interleaved by the bit-stream processing/ transmitting apparatus of FIG. 1. The compression layer is defined as a layer for performing operations required to decode payloads from elementary streams.

In particular, the payload restorer 720 obtains information on payloads in terms of the number of layers, the length, and the order by using header information on payloads included in the elementary streams restored by the ES restorer 710, wherein the header information includes information on payloads grouped and interleaved by the bit-stream processing/transmitting apparatus of FIG. 1. Thereafter, by using the obtained information, the payload restorer 720 de-interleaves the payloads received as one group as described above so as to restore one sub frames, and then restores another sub frame.

In the exemplary case illustrated in FIG. 2, the payload restorer 720 restores each layer's BSAC payloads of audio data by de-interleaving the payloads received as one group as described above, and also restores each layer's BSAC payloads of` data for extending a channel of audio data.

In the exemplary case illustrated in FIG. 3, the payload restorer 720 restores each layer's BSAC payloads of audio data by de-interleaving the payloads received as one group as described above, and also restores a payload of data for extending a bandwidth of audio data.

The decoder 730 hierarchically decodes audio data included in each layer's payloads restored by the payload restorer 720. Further, the decoder 730 decodes extension data of audio data including at least one of data for extending a channel of audio data restored by the payload restorer 720 to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

FIG. 8 is a block diagram of a bit-stream receiving/processing apparatus according to another embodiment of the present invention. The bit-stream receiving/processing apparatus includes a receiver 800, an ES restorer 810, a payload restorer 820, and a decoder 830. According to the configuration illustrated in FIG. 8, a method of truncating a payload can be implemented.

The receiver 800 receives a bit-stream in a specific packet format through an input terminal IN, and thus receives payloads having a part truncated by the coder of FIG. 1 and SL packets including a payload of extension data of audio data. According to the present embodiment, the receiver **800** receives some of the payloads included in one sub frame and some of the payloads included in another sub frame as one group.

The ES restorer 810 parses the SL packets received by the receiver 800 on the SL layer, and thus restores an elementary stream including the payloads having a part truncated by the coder of FIG. 1, and also restores an elementary stream including a payload of extension data of audio data.

The payload restorer 820 restores payloads to the original form by parsing elementary streams restored by the ES restorer 810. That is, the payload restorer 820 restores payloads to the original form by using payloads, wherein some of the payloads of audio data are truncated by the bit-stream processing/transmitting apparatus of FIG. 1, and a payload of extension data is not truncated.

In particular, the payload restorer 820 restores one sub frame including payloads having a truncated part and a payload of extension data from payloads having a truncated audio part included in one elementary stream restored by the ES restorer 810 and a payload of extension data included in another elementary stream.

The decoder 830 hierarchically decodes audio data included in each layer's payloads restored by the payload restorer 820. Further, the decoder 830 decoders extension data of audio data including at least one of data for extending a channel of audio data restored by the payload restorer 820 to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

In the exemplary case illustrated in FIG. 3, the payload restorer 820 uses payloads of audio data, wherein some of the payloads are truncated whereas a payload of data for extending a bandwidth of audio data is not truncated, thereby restoring the payloads to the original form. More specifically, the payload restorer 820 restores one sub frame including payloads having a truncated part and a payload of data for extending a bandwidth of audio data from payloads having a truncated audio data part included in one elementary stream and a payload of data for extending a bandwidth of audio data included in another elementary stream.

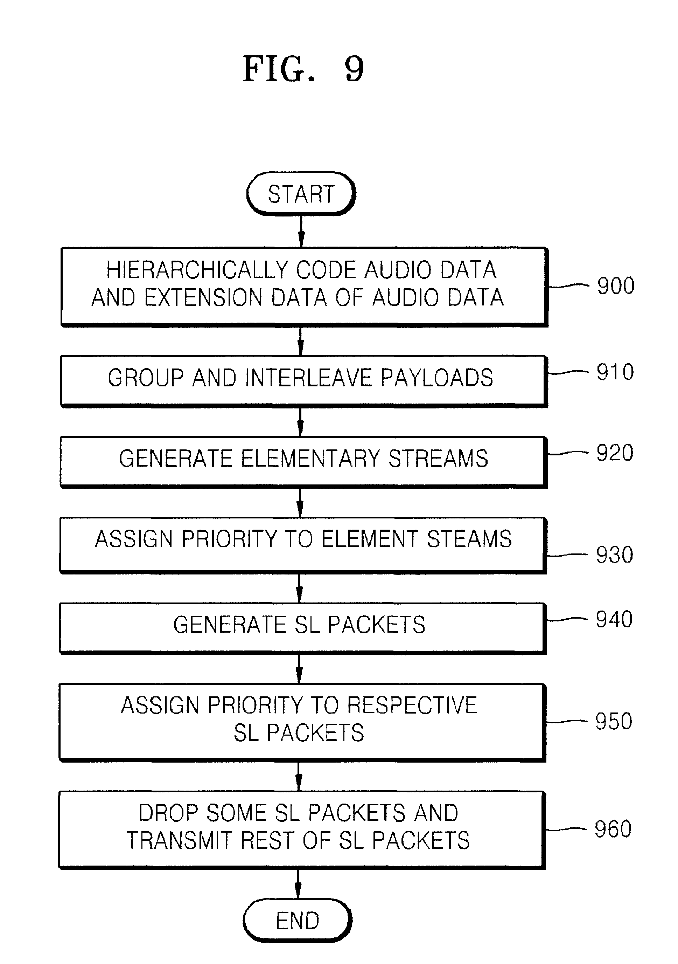

FIG. 9 is a flowchart of a bit-stream processing/transmitting method according to an embodiment of the present invention.

Referring to FIG. 9, the bit-stream processing/transmitting method includes operations sequentially performed in the bit-stream processing/transmitting apparatus of FIG. 1. Thus, although omitted, the above descriptions for the bit-stream processing/ transmitting apparatus of FIG. 1 apply to the bit-stream processing/transmitting method according to the present embodiment.

First, audio data and extension data of the audio data are hierarchically coded (operation 900). In this operation, the audio data may be coded by using the BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, in operation 900, at least one of the aforementioned examples of the extension data of the audio data may be coded.

Payloads are grouped and interleaved so that some of the payloads included in one sub frame resulting from the coding in operation 900 and some of the payloads included in another sub frame belong to one group (operation 910). Elementary streams corresponding to payload groups on a compression layer are generated from the payloads grouped and interleaved in operation 910 (operation 920).

Priority is assigned to the elementary streams generated in operation 920 (operation 930)

SL packets corresponding to payload groups on a sync layer are generated from the elementary streams generated in operation 930 (operation 940).

Priority is assigned to the respective SL packets generated in operation 940 (operation 950).

According to the priority assigned in operation 930 and 950, some of the SL packets are dropped and the rest of SL packets are transmitted (operation 960).

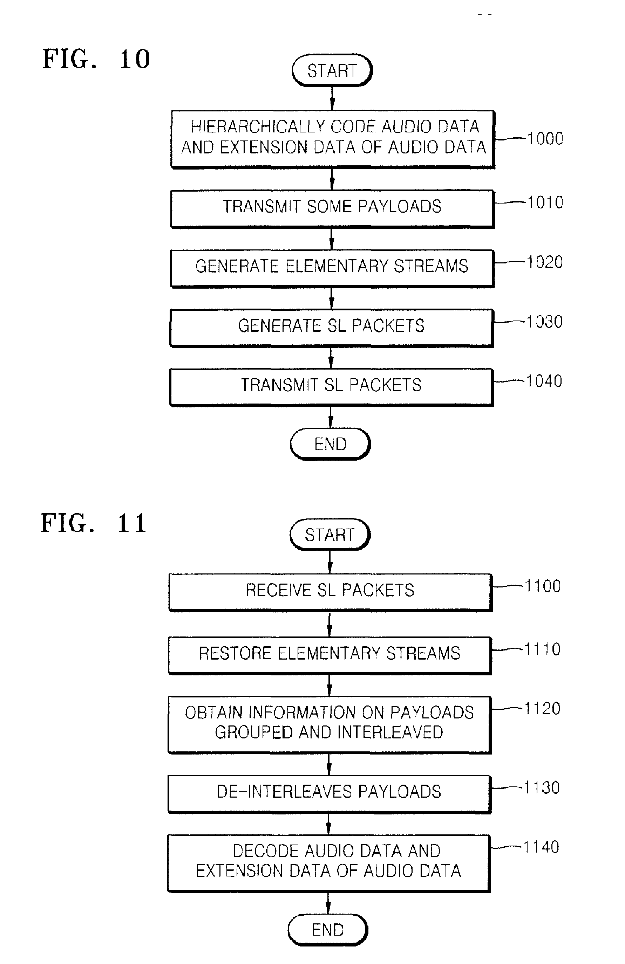

FIG. 10 is a flowchart of a bit-stream processing/tra-nsmitting method according to another embodiment of the present invention.

Referring to FIG. 9, the bit-stream processing/transmitting method includes operations sequentially performed in the bit-stream processing/transmitting apparatus of FIG. 5. Thus, although omitted, the above descriptions for the bit-stream processing/ transmitting apparatus of FIG. 5 apply to the bit-stream processing/transmitting method according to the present embodiment.

First, audio data and extension data of the audio data are hierarchically coded (operation 1000). In this operation, the audio data may be coded by using the BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, in operation 1000, at least one of the aforementioned examples of the extension data of the audio data may be coded.

After operation 1000, some of the payloads included in one sub frame resulting from the coding in operation 1000 are truncated along with some of the payloads included in another sub frame by considering a transmission environment between a coder side and a decoder side, for example, by considering the number of layers that can be determined by a payload from a back-channel (operation 1010).

One elementary stream is generated which corresponds to payload groups on the compression layer from the payloads truncated in operation 1010, and another elementary stream is also generated from a payload of extension data (operation 1020).

SL packets corresponding to payload groups on the SL layer are generated from the elementary streams generated in operation 1020 (operation 1030).

The SL packets generated in operation 1030 are transmitted (operation 1040).

FIG. 11 is a flowchart of a bit-stream receiving/processing method according to another embodiment of the present invention.

Referring to FIG. 11, the bit-stream receiving/processing method includes operations sequentially performed in the bit-stream processing/transmitting apparatus of FIG. 7. Thus, although omitted, the above descriptions for the bit-stream processing/ transmitting apparatus of FIG. 7 apply to the bit-stream processing/transmitting method according to the present embodiment.

First, SL packets including some of the payloads grouped and interleaved by the bit-stream processing/transmitting apparatus of FIGS. 1 and 5 are received (operation 1100).

Elementary streams including some of the payloads grouped and interleaved by the bit-stream processing/transmitting apparatus of FIG. are restored by parsing the SL packets received in operation 1100 (operation 1110).

Information on payloads is obtained in terms of the number of layers, the length, and the order by using header information on payloads included in the elementary streams restored in operation 1110, wherein the header information includes information on the payloads grouped and interleaved by the bit-stream processing/ transmitting apparatus of FIGS. 1 and 5 (operation 1120).

Payloads are restored to the original form by de-interleaving the payloads included in the elementary streams using information obtained in operation **1120** (operation 1130).

Audio data, which is included in each layer's payloads restored in operation 1130, and extension data of the audio data are hierarchically decoded (operation 1140). Further in this operation extension data of the audio data is decoded which includes at least one of data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

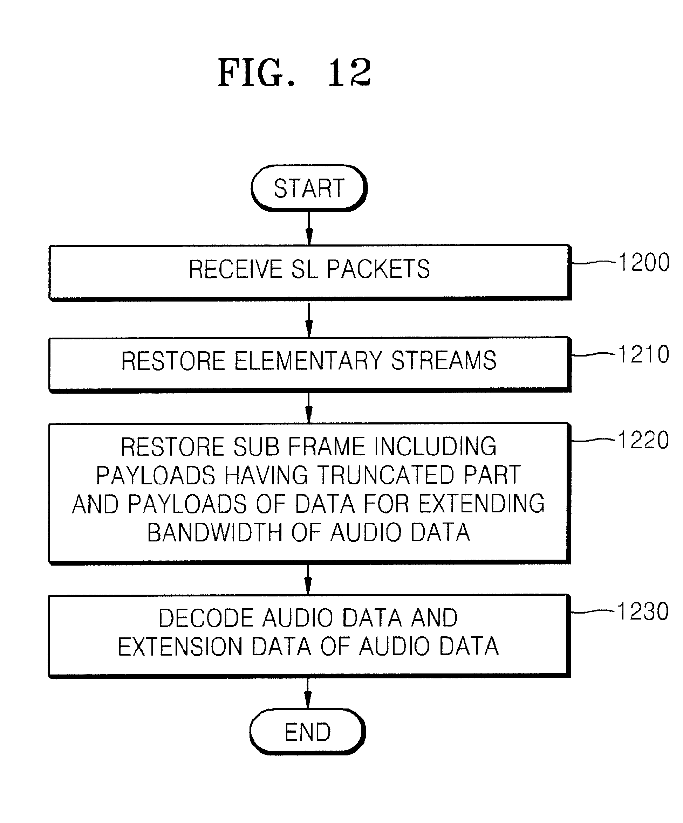

FIG. 12 is a flowchart of a bit-stream receiving/processing method according to another embodiment of the present invention.

Referring to FIG. 12, the bit-stream receiving/processing method includes operations sequentially performed in the bit-stream processing/transmitting apparatus of FIG. 8. Thus, although omitted, the above descriptions for the bit-stream processing/ transmitting apparatus of FIG. 8 apply to the bit-stream processing/transmitting method according to the present embodiment.

First, SL packets including some of the payloads grouped and interleaved by the bit-stream processing/transmitting apparatus of FIGS. 1 and 5 are received (operation 1200).

By parsing SL packets received in operation 1200 on the SL layer, elementary streams are restored which include payloads having a part truncated by the bit-stream processing/transmitting apparatus of FIGS. 1 and 5, and an elementary stream including a payload of extension data of audio data is also restored.

Payloads are restored to the original form by parsing the elementary streams restored in operation 1210 (operation 1220). In particular, in the bit-strewn receiving/ processing method of the present embodiment, one sub frame is restored which includes payloads having a truncated part and a payload of data for extending a bandwidth of audio data from payloads having a truncated audio data part included in one elementary stream and a payload of data for extending a bandwidth of audio data included in another elementary stream.

Audio data, which is included in each layer's payloads restored in operation 1220; and extension data of the audio data are hierarchically decoded (operation 1230). Further in this operation extension data of the audio data is decoded which includes at least one of data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

The embodiments of the present invention can be written as computer programs and can be implemented in general-use digital computers that execute the programs using a computer readable recording medium. The invention can also be embodied as computer readable codes on a computer readable recording medium.

The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet).

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.
Further embodiments of the invention are described in the following.
1. A method of processing/transmitting a bit-stream, the method comprising: coding audio data and one or more extension data of the audio data; interleaving payloads resulting from the coding by grouping the payloads; and dropping a group of the payloads grouped and interleaved, and transmitting the rest of groups of the payloads.
2. The method of embodiment 1, wherein, in the interleaving, some of the payloads included in one sub frame and some of the payloads included in another sub frame are grouped and interleaved so as to belong to one group.
3. The method of embodiment 1, wherein: in the coding, the audio data is hierarchically coded, and data for extending a channel of the audio data is hierarchically coded; and in the interleaving, the payloads are grouped and interleaved so that a base layer of each layer's payloads of the audio data and a base layer of each layer's payloads of data for extending the channel of the audio data belong to one group.
4. The method of embodiment 1, wherein: in the coding, the audio data is hierarchically coded, and data for extending a channel of the audio data is hierarchically coded; and in the interleaving, the payloads are grouped and interleaved so that a top layer of each layer's payloads of the audio data and a top layer of each layer's payloads of data for extending the channel of the audio data belong to one group.
5. The method of embodiment 1, wherein: in the coding, the audio data is hierarchically coded, and data for extending a bandwidth of the audio data is hierarchically coded; and in the interleaving, the payloads are grouped and interleaved so that some of the payloads of audio data included in one sub frame and some of the payloads of audio data included in another sub frame belong to one group.
6. The method of embodiment 1, wherein: in the coding, the audio data is hierarchically coded, and data for extending a bandwidth of the audio data is hierarchically coded; and in the interleaving, the payloads are grouped and interleaved so that a payload of data for extending a bandwidth of audio data included in one sub frame and a payload of data for extending a bandwidth of audio data included in another sub frame belong to one group.
7. The method of embodiment 1, further comprising assigning priority to respective groups of the payloads grouped and interleaved, wherein, in the transmitting, some of the groups are dropped according to the assigned priority,
8. The method of embodiment 1, further comprising: generating elementary streams from the payloads grouped and interleaved; and generating sync layer packets from the generated elementary streams, wherein, in the transmitting, some of the generated sync layer packets are dropped, and the rest of sync layer packets are transmitted.
9. The method of embodiment 1, wherein, in the coding, the audio data is coded by using one coding method, and the one or more extension data of the audio data is coded by using one or more coding method.
10. The method of embodiment 1, wherein, in the interleaving, a group of the payloads is dropped by taking a transmission environment into account.
11. A computer-readable medium having embodied thereon a computer program for executing the method of embodiment 1.
12. An apparatus for processing/transmitting a bit-stream, the apparatus comprising: a coder that codes audio data and one or more extension data of the audio data; a processor that interleaves payloads resulting from the coding by grouping the payloads; and a transmitter that drops a group of the payloads grouped and interleaved, and transmits the rest of groups of the payloads.
13. A method of processing/transmitting a bit-stream, the method comprising: coding audio data and one or more extension data of the audio data; truncating some payloads resulting from the coding; and transmitting the truncated payloads.
14. The method of embodiment 13, wherein, in the truncating, some of the payloads of the audio data are truncated, while a payload of the extension data is not truncated.
15. The method of embodiment 13, wherein: in the coding, the audio data is hierarchically coded, and data for extending a bandwidth of the audio data is coded; and in the truncating, some of the payloads of the audio data are truncated, and a payload of data for extending a bandwidth of the audio data is not truncated.
16. The method of embodiment 13, the truncating further comprises truncating some payloads of the audio data included in one sub frame and some of the payloads of the audio data included in another sub frame, and generating elementary streams from the truncated payloads.
17. The method of embodiment 13, further comprising generating elementary streams from a payload of data for extending a bandwidth of the audio data included in one sub frame and a payload of data for extending a bandwidth of the audio data included in another sub frame.
18. The method of embodiment 13, further comprising: generating elementary streams from the truncated payloads; and generating sync layer packets from the generated elementary streams, wherein, in the transmitting, the generated sync layer packets are transmitted.
19. The method of embodiment 13, further comprising: generating elementary streams from payloads of the extension data; and generating sync layer packets from the generated elementary streams, wherein, in the transmitting, the generated sync layer packets are transmitted.
20. The method of embodiment 13, wherein, in the truncating, a coded part of the extension data is identified by using a code that indicates the end of the coded part of audio data and a code that indicates the start of the coded part of extension data of the audio data, and is truncated according to the identification result.
21. The method of embodiment 13, wherein, in the truncating, some of the payloads are truncated by taking a transmission environment into account.
22. A computer-readable medium having embodied thereon a computer program for executing the method of embodiment 13.
23. An apparatus for processing/transmitting a bit-stream, the apparatus comprising: a coder that codes audio data and one or more extension data of the audio data; a truncator that truncates some payloads resulting from the coding of the coder; and a transmitter that transmits the truncated payloads.
24. A method of receiving/processing a bit-stream, the method comprising: receiving some payloads grouped and interleaved; restoring the payloads grouped and interleaved to original form; and decoding audio data included in the restored payloads and one or more extension data of the audio data.
25. The method of embodiment 24, wherein: in the receiving, some of the payloads included in a first sub frame and some of the payloads included in a second sub frame are received as one group; and in the restoring, by de-interleaving the payloads received as one group, the first sub frame is restored, and the second sub frame is restored.
26. The method of embodiment 25, wherein, in the decoding, audio data included in the restored first sub frame is decoded, and data for extending a channel of the audio data included in the second sub frame is decoded.
27. The method of embodiment 25, wherein, in the decoding, audio data included in the restored first sub frame is decoded, and data for extending a bandwidth of the audio data included in the second sub frame is decode.
28. The method of embodiment 24, wherein: in the receiving, a base layer of each layer's payloads of the audio data and a base layer of each layer's payloads of data for extending a channel of the audio data are received as one group; and in the restoring, by de-interleaving the payloads received as one group, each layer's payloads of the audio data are restored, and each layer's payloads of data for extending the channel of the audio data are restored.
29. The method of embodiment 24, wherein: in the receiving, a top layer of each layer's payloads of the audio data and a top layer of each layer's payloads of data for extending a channel of the audio data are received as one group; and in the restoring, by de-interleaving the payloads received as one group, each layer's payloads of the audio data are restored, and each layer's payloads of data for extending the channel of the audio data are restored.
30. The method of embodiment 24, wherein: in the receiving, some of the payloads of the audio data included in a first sub frame and some of the payloads of the audio data included in a second sub frame are received as one group, and a payload of data for extending a bandwidth of the audio data included in the first sub frame and a payload of data for extending a bandwidth of the audio data included in the second sub frame are received as one group; and in the restoring, by de-interleaving the payloads received as one group, each layer's payloads of the audio data are restored, and a payload of data for extending the bandwidth of the audio data.
31. The method of embodiment 24, the receiving further comprises restoring elementary streams by receiving sync layer packets including some of the payloads grouped and interleaved and parsing the received sync layer packets, wherein, in the restoring, the payloads are restored to the original form by paring the restored elementary streams.
32. The method of embodiment 24, wherein, in the decoding, the audio data is decoded by using one decoding method, and one or more extension data of the audio data is decoded by using one or more decoding method.
33. The method of embodiment 24, wherein, in the restoring, the payloads are restored on the basis of information on the payloads grouped and interleaved by a coder side.
34. A computer-readable medium having embodied thereon a computer program for executing the method of embodiment 24.
35. An apparatus for receiving/processing a bit-stream, the apparatus comprising: a receiver that receives some payloads grouped and interleaved; a restorer that restores the payloads grouped and interleaved to original form; and a decoder that decodes audio data included in the restored payloads and one or more extension data of the audio data.
36. A method of receiving/processing a bit-stream, the method comprising: receiving payloads having a truncated part; restoring the payloads having a truncated part to the original form; and decoding audio data included in the restored payloads and extension data of the audio data.
37. The method of embodiment 36, wherein, in the restoring, the payloads are restored to the original form by using payloads in which some of the payloads of audio data are truncated and a payload of the extension data is not truncated.
38. The method of embodiment 36, wherein, in the restoring, the payloads are restored to the original form by using payloads in which some of the payloads of audio data are truncated and a payload of data for extending a bandwidth of the audio is not truncated.
39. The method of embodiment 36, wherein, in the restoring, some of the payloads are restored by decoding the data for extending a bandwidth of the audio data.
40. The method of embodiment 36, further comprising determining whether some of the payloads are truncated, by comparing length information on the audio data included in head information on the payloads having a truncated part with an actual size of the audio data, wherein, in the decoding, the some of the payloads are restored on the basis of the determination result.
41. The method of embodiment 36, wherein, in the decoding, audio data included in the restored payloads is hierarchically decoded, and the data for extending a bandwidth of the audio data is decoded.
42. The method of embodiment 36, wherein, in the restoring, one sub frame, which includes payloads having a truncated part and a payload of the extension data, is restored from payloads having a truncated audio data part included in one elementary stream and a payload of extension data included in another elementary stream.
43. The method of embodiment 36, wherein, in the restoring, one sub frame, which includes the payloads having a truncated part and the payload of data for extending a bandwidth of the audio data, is restored from payloads having a truncated audio data part included in one elementary stream and a payload of data for extending a bandwidth of the audio data.
44. The method of embodiment 36, the receiving further comprises receiving sync layer packets including the payloads having a truncated part and sync layer packets including a payload of the extension data, and restoring an elementary stream including the payloads having a truncated part and an elementary stream including the payload of the extension data by parsing the received sync layer packets, wherein, in the restoring, one sub frame, which includes the payloads having a truncated part and the payload of the extension data, is restored by parsing the restored elementary streams.
45. The method of embodiment 36, wherein, in the restoring, a code that indicates the end of a coded part of audio data and a code that indicates the start of the coded part of extension data of the audio data are detected so as to identify a starting point of the coded part of the extension data, and the extension data is decoded on the basis of the identification result.
46. The method of embodiment 36, in the decoding, an ending point of the coded part of the extension data is identified on the basis of length information on the extension data, and the extension data is decoded on the basis of the identification result.
47. A computer-readable medium having embodied thereon a computer program for executing the method of embodiment 36.
48. An apparatus of receiving/processing a bit-stream, the apparatus comprising: a receiver that receives payloads having a truncated part; a restorer that restores the payloads having a truncated part to the original form; and a decoder that decodes audio data included in the restored payloads and one or more extension data of the audio data.

## Claims

1. A method of processing/transmitting a bit-stream, the method comprising:
coding audio data and one or more extension data of the audio data;
truncating some payloads resulting from the coding; and
transmitting the truncated payloads.

2. The method of claim 1, wherein: in the coding, the audio data is hierarchically coded, and data for extending a bandwidth of the audio data is coded; and in the truncating, some of the payloads of the audio data are truncated, and a payload of data for extending a bandwidth of the audio data is not truncated.

3. The method of claim 1, the truncating further comprises truncating some payloads of the audio data included in one sub frame and some of the payloads of the audio data included in another sub frame, and generating elementary streams from the truncated payloads.

4. The method of claim 1, further comprising generating elementary streams from a payload of data for extending a bandwidth of the audio data included in one sub frame and a payload of data for extending a bandwidth of the audio data included in another sub frame.

5. The method of claim 1, further comprising: generating elementary streams from the truncated payloads; and generating sync layer packets from the generated elementary streams, wherein, in the transmitting, the generated sync layer packets are transmitted.

6. The method of claim 1, further comprising: generating elementary streams from payloads of the extension data; and generating sync layer packets from the generated elementary streams, wherein, in the transmitting, the generated sync layer packets are transmitted.

7. The method of claim 1, wherein, in the truncating, some of the payloads of the audio data are truncated, while a payload of the extension data is not truncated, or a coded part of the extension data is identified by using a code that indicates the end of the coded part of audio data and a code that indicates the start of the coded part of extension data of the audio data, and is truncated according to the identification result, or some of the payloads are truncated by taking a transmission environment into account.

8. An apparatus for processing/transmitting a bit-stream, the apparatus comprising:
a coder that codes audio data and one or more extension data of the audio data;
a truncator that truncates some payloads resulting from the coding of the coder; and
a transmitter that transmits the truncated payloads.

9. A method of receiving/processing a bit-stream, the method comprising:
receiving payloads having a truncated part;
restoring the payloads having a truncated part to the original form; and
decoding audio data included in the restored payloads and extension data of the audio data.

10. The method of claim 9, wherein, in the restoring, the payloads are restored to the original form by using payloads in which some of the payloads of audio data are truncated and a payload of the extension data is not truncated, or the payloads are restored to the original form by using payloads in which some of the payloads of audio data are truncated and a payload of data for extending a bandwidth of the audio is not truncated, or some of the payloads are restored by decoding the data for extending a bandwidth of the audio data, or a code that indicates the end of a coded part of audio data and a code that indicates the start of the coded part of extension data of the audio data are detected so as to identify a starting point of the coded part of the extension data, and the extension data is decoded on the basis of the identification result.

11. The method of claim 9, further comprising determining whether some of the payloads are truncated, by comparing length information on the audio data included in head information on the payloads having a truncated part with an actual size of the audio data, wherein, in the decoding, the some of the payloads are restored on the basis of the determination result.

12. The method of claim 9, wherein, in the decoding, audio data included in the restored payloads is hierarchically decoded, and the data for extending a bandwidth of the audio data is decoded, or an ending point of the coded part of the extension data is identified on the basis of length information on the extension data, and the extension data is decoded on the basis of the identification result.

13. The method of claim 9, wherein, in the restoring, one sub frame, which includes payloads having a truncated part and a payload of the extension data, is restored from payloads having a truncated audio data part included in one elementary stream and a payload of extension data included in another elementary stream, or one sub frame, which includes the payloads having a truncated part and the payload of data for extending a bandwidth of the audio data, is restored from payloads having a truncated audio data part included in one elementary stream and a payload of data for extending a bandwidth of the audio data.

14. The method of claim 9, the receiving further comprises receiving sync layer packets including the payloads having a truncated part and sync layer packets including a payload of the extension data, and restoring an elementary stream including the payloads having a truncated part and an elementary stream including the payload of the extension data by parsing the received sync layer packets, wherein, in the restoring, one sub frame, which includes the payloads having a truncated part and the payload of the extension data, is restored by parsing the restored elementary streams.

15. An apparatus of receiving/processing a bit-stream, the apparatus comprising:
a receiver that receives payloads having a truncated part;
a restorer that restores the payloads having a truncated part to the original form; and
a decoder that decodes audio data included in the restored payloads and one or more extension data of the audio data.
